# EUROPÄISCHE PATENTANMELDUNG

(11) **EP 1 770 400 A1**
(43) Veröffentlichungstag der Anmeldung: **04.04.2007**
(21) Anmeldenummer: 05021100.2
(22) Anmeldetag: 28.09.2005
(51) Int. Cl.: G01P 3/488, G01R 33/09, G01D 5/14

(54) **Vorrichtung mit Hall-Sensoren zum Erfassen von Drehzahlen**

(71) Anmelder: Jaquet AG, 4054 Basel (CH)
(72) Erfinder: Griessmann, Marcel, 68700 Steinbach (FR); Möller, Udo, 4310 Rheinfelden (CH)
(74) Vertreter: Blum, Rudolf Emil

(57) **Zusammenfassung**

Eine Vorrichtung (1) zur Messung von Drehzahlen hat ein Magnetsystem (18), eine Anordnung magnetfeldsensitiver Sensoren (H1, H2, H3, H4), die vom Magnetsystem (18) gekoppelte Magnetfeldänderungen in elektrische Sensorsignale wandeln, und eine Einrichtung zur Verarbeitung der elektrischen Sensorsignale. Jeweils zwei der magnetfeldsensitiven Sensoren bilden einen Kanal, wobei die magnetfeldsensitiven Sensoren auf einem gemeinsamen Träger (16) angeordnet sind, und wobei ein Signal eines ersten Kanals (D1) und ein Signal eines zweiten Kanals (D2) eine Phasenverschiebung von etwa 90° haben.

## Beschreibung

### Hintergrund

Die hier beschriebenen Ausführungsbeispiele der Erfindung betreffen allgemein eine Vorrichtung zum Erfassen von Drehzahlen. Die Ausführungsbeispiele betreffen insbesondere eine Vorrichtung mit magnetfeldsensitiven Sensoren.

### Stand der Technik

Bei einer bekannten Vorrichtung zur Messung von Drehzahlen ist ein Permanentmagnet mit einem Hall-Sensor kombiniert. Diese Vorrichtung eignet sich in den verschiedensten Anwendungen, beispielsweise in Maschinen und Fahrzeugen, zum berührungslosen Erfassen von Drehzahlen. In einer solchen Vorrichtung ist der Permanentmagnet nahe einer ferromagnetischen Struktur, beispielsweise einem Zahnrad oder Polrad, positioniert. Bewegen sich zum Beispiel die Zähne eines Zahnrades am Permanentmagneten vorbei ändert sich das Magnetfeld in Abhängigkeit der sich vorbeibewegenden Zähne. Das sich ändernde Magnetfeld erzeugt im Hall-Sensor eine Hall-Spannung, die sich entsprechend der Magnetfeldänderung ändert. Die Vorrichtung zur Messung von Drehzahlen enthält ausserdem eine Signalverarbeitungseinrichtung, die die Hall-Spannung auf einen festgelegten Pegel verstärkt und einem Ausgang zur weiteren Auswertung zuführt.

Es besteht der Bedarf, solche Vorrichtungen zur Messung von Drehzahlen universeller und mit zusätzlicher Funktionalität auszugestalten. Eine Möglichkeit, dies zu erreichen, ist eine Integration der Hall-Sensoren und der Signalverarbeitungseinrichtung auf einem Halbleitersubstrat. Eine Integration hat jedoch oft negative Auswirkungen auf das elektrische Verhalten der Schaltkreise, beispielsweise das Gleichtaktverhalten und die Leistungsaufnahme.

### Darstellung der Erfindung

Ein Ziel der hier beschriebenen Ausführungsbeispiele der Erfindung ist daher, eine Vorrichtung zur Messung von Drehzahlen so auszugestalten, dass die genannten negativen Auswirkungen trotz einer Integration von Hall-Sensoren und Signalverarbeitungseinrichtung auf einer möglichst kleinen Fläche vernachlässigbar bleiben.

Ein Aspekt der Erfindung betrifft eine Vorrichtung zur Messung von Drehzahlen, mit einem Magnetsystem, einer Anordnung von magnetfeldsensitiven Sensoren, die vom Magnetsystem gekoppelte Magnetfeldänderungen in elektrische Sensorsignale wandeln, und einer Einrichtung zur Verarbeitung der elektrischen Sensorsignale. Jeweils zwei der magnetfeldsensitiven Sensoren bilden einen Kanal, wobei die magnetfeldsensitiven Sensoren auf einem gemeinsamen Träger angeordnet sind, und wobei ein Signal eines ersten Kanals und ein Signal eines zweiten Kanals eine Phasenverschiebung von etwa 90° haben.

In einem Ausführungsbeispiel ist die Vorrichtung so ausgestaltet, so dass ein Kanalabstand zwischen dem ersten Kanal und dem zweiten Kanal besteht, und ein Differentialabstand zwischen den Sensoren eines Kanals besteht, wobei der Kanalabstand grösser als der Differentialabstand ist. Der Kanalabstand kann etwa 2,6 mm betragen und der Differentialabstand etwa 1,6 mm. Diese Abstände lassen sich auf einer Anordnung mit einer flache von etwa 4 mm² bis etwa 6 mm² realisieren, und beispielsweise in einem ASIC integrieren.

In einem weiteren Ausführungsbeispiel ist das Magnetsystem zur Kompensation von unterschiedlichen elektrischen Eigenschaften der Sensoren ausgestaltet, wobei das Magnetsystem ein vorbestimmtes und von den Sensoren wahrnehmbares Magnetfeld erzeugt, um die unterschiedlichen elektrischen Eigenschaften der Sensoren zu kompensiert. Das Magnetsystem kann beispielsweise aus einer Scheibe aus Metall und einen Permanentmagneten, aus einem Permanentmagneten mit einer bestimmten Oberflächenstruktur, oder aus einem Permanentmagneten mit einer nicht regelmässigen Magnetisierung bestehen.

Ein weiterer Aspekt der Erfindung betrifft ein Verfahren zur Kompensation von unterschiedlichen elektrischen Eigenschaften magnetfeldsensitiver Sensoren in einer Vorrichtung zur Messung von Drehzahlen, wobei die Sensoren Magnetfeldänderungen in elektrische Sensorsignale wandeln. Ein Magnetsystem wird an die magnetfeldsensitiven Sensoren gekoppelt, wobei das Magnetsystem ein vorbestimmtes und von den Sensoren wahrnehmbares Magnetfeld erzeugt. Die elektrischen Sensorsignale werden ausgewertet, um unterschiedliche elektrische Eigenschaften zu erkennen. Das Magnetsystem wird relativ zu den magnetfeldsensitiven Sensoren gedreht, bis eine gewünschte Beeinflussung und damit die Kompensation erzielt sind.

### Kurze Beschreibung der Zeichnungen

Weitere Ausgestaltungen, Vorteile, neue Eigenschaften und Anwendungen der Erfindung ergeben sich aus der folgenden detaillierten Beschreibung unter Einbezug der Zeichnungen. In den Zeichnungen haben gleiche Elemente die gleichen Bezugszeichen. In den Zeichnungen zeigen:
Figur 1 eine schematische Darstellung eines Ausführungsbeispiels einer Vorrichtung zur Messung von Drehzahlen mit einem Hall-Sensor,
Figur 2 eine schematische Darstellung, wie die in Figur 1 gezeigte Vorrichtung zu einem Zahnrad ausgerichtet ist,
Figur 3 ein Ausführungsbeispiel einer Vorrichtung zur Messung von Drehzahlen mit einem Magnetsystem zur Kompensation von unterschiedlichen elektrischen Eigenschaften, und
Figur 4 eine beispielhafte Funktion der Magnetfeldstärke B als Funktion des Drehwinkels ϕ.

### Detaillierte Beschreibung einiger Ausführungsbeispiele

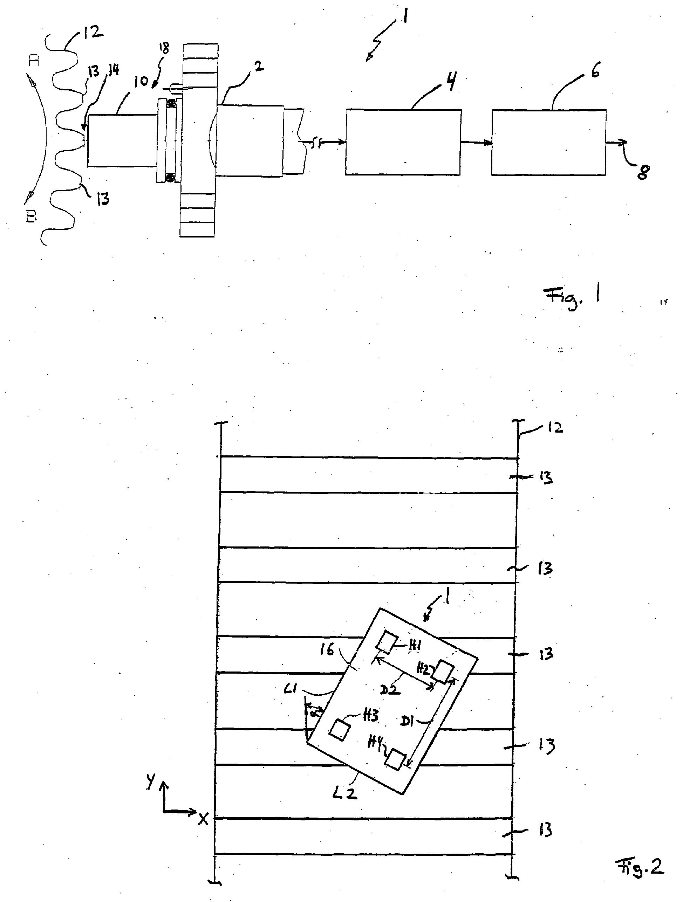

Figur 1 zeigt eine schematische Darstellung eines Ausführungsbeispiels einer Vorrichtung 1 zur Messung von Drehzahlen mit einer Sensoreinrichtung. Die Vorrichtung 1 hat in einem Ausführungsbeispiel ein Gehäuse 2, z. B. aus Metall, in dem Sensoreinrichtung und eine Auswerteelektronik, die z. B. verschiedene Einrichtungen 4, 6 enthält, angeordnet sind. Die Sensoreinrichtung hat eine Anordnung von magnetfeldsensitiven Sensoren, beispielsweise Hall-Sensoren.

Die Hall-Sensoren und die Auswerteelektronik können dabei allgemein auf einem Halbleitersubstrat, beispielsweise in einem anwendungsspezifischen integrierten Schaltkreis (ASIC), angeordnet sein. Die Vorrichtung 1 hat einen Ausgang 8 für ein Sensorsignal und nicht gezeigte Anschlüsse zum Anschluss an eine Spannungsquelle. In einem Ausführungsbeispiel liefert die Spannungsquelle eine Spannung von ca. +5V. Je nach Anwendung können auch höhere oder niedrigere Spannungen gewählt werden.

Wie in Figur 1 gezeigt, hat die Vorrichtung 1 ausserdem einen Permanentmagneten 10 als Teil eines Magnetsystems 18, der nahe dem ASIC und damit nahe den Hall-Sensoren angeordnet ist. Für ein besseres Verständnis ist die Vorrichtung 1 in Figur 1 nahe einer rotierenden ferromagnetischen Struktur 12 angeordnet, und zwar so, dass der Permanentmagnet 10 durch einen Spalt 14 von der Struktur 12 getrennt ist.

Die ferromagnetische Struktur 12 ist in einem Ausführungsbeispiel ein Zahnrad, das sich in Figur 1 mit (Richtung B) oder entgegen (Richtung A) dem Uhrzeigersinn, oder abwechselnd in eine der beiden Richtungen A, B drehen kann. Dreht sich das Zahnrad, vergrössert und verkleinert sich der Spalt 14 mit der Periodizität der Zähne 13. Die periodische Änderung des Spaltes 14 verursacht eine periodische Magnetfeldänderung, die die Hall-Sensoren in elektrische Sensorsignale wandeln, die an die mit den Hall-Sensoren direkt oder indirekt verbundenen Einrichtungen 4, 6 weitergeleitet werden.

Figur 2 zeigt schematisch, wie die in Figur 1 gezeigte Vorrichtung zum Zahnrad 12 und dessen Zähnen 13 ausgerichtet ist. Zur Orientierung ist ein X-Y Koordinatensystem eingezeichnet. Das Zahnrad 12 ist dabei aus der Sicht der Vorrichtung 1 gezeigt, dessen Umfang sich in Y-Richtung erstreckt. Jeder Zahn 13 erstreckt sich in X-Richtung. In Figur 2 ist von der Vorrichtung 1 nur eine schematisch gezeigte und als Träger 16 ausgestaltete Anordnung mit vier Hall-Sensoren H1, H2, H3, H4 gezeigt. Der Permanentmagnet 10 ist zwischen dem Zahnrad 12 und der Anordnung 16 positioniert und in Figur 2 nicht sichtbar.

In einem Ausführungsbeispiel ist der Träger 16 ein Halbleitersubstrat, auf dem zusätzlich integrierte Schaltungen, insbesondere die Einrichtungen 4, 6, vorhanden sind. Der Träger 16 kann somit beispielsweise als ein ASIC ausgestaltet sein. Wie in Figur 2 gezeigt, hat der Träger 16 eine rechteckige Form mit einer Länge L1 und einer Breite L2. Die Länge L1 und die Breite L2 können gleiche oder verschiedene Beträge haben. Der Träger 16 ist bezüglich dem Zahnrad 12 gedreht, so dass die Länge L1 mit der Y-Achse einen Winkel α einschliesst.

Auf dem Träger 16 sind die Hall-Sensoren H1-H4 in der Nähe der vier Ecken angeordnet, wobei die Hall-Sensoren H1, H2 auf einer Seite entlang der Länge L2 und die Hall-Sensoren H3, H4 auf einer gegenüberliegenden Seite des Trägers 16 ebenfalls entlang der Länge L2 angeordnet sind. Die Hall-Sensoren H1, H2 bilden einen ersten Kanal und die Hall-Sensoren H3, H4 einen zweiten Kanal, wobei in jedem Kanal die Signaldifferenz zwischen den beiden dem Kanal zugeordneten Hall-Sensoren H1, H2, H3, H4 gemessen wird. Die beiden Kanäle sind durch einen Abstand D1 voneinander getrennt, der im folgenden auch als Kanalabstand D1 bezeichnet wird. Die Hall-Sensoren eines Kanals (H1, H2; H3, H4) sind durch einen Abstand D2 voneinander getrennt, der im folgenden auch als Differentialabstand D2 bezeichnet wird.

Der Kanalabstand D1 sollte so gross wie möglich sein, um beispielsweise eine Phasenverschiebung von etwa 90° zwischen beiden Kanälen zu erreichen. Der Differentialabstand D2 sollte dagegen so klein wie möglich sein, um eine bessere Unterdrückung von fremden Gleichtaktstörungen zu erzielen und damit die beiden Sensoren jedes Kanals möglichst gleiche physikalische Eigenschaften besitzen. Ein begrenzender Faktor für die Wahl der Abstände D1, D2 ist die Fläche des Trägers 16. Die Fläche des Trägers 16 beträgt in einem Ausführungsbeispiel etwa 4-6 mm², wobei der Abstand D1 etwa 2,4 mm und der Abstand D2 etwa 1,5 mm betragen.

Jeder Kanal erzeugt ein periodisches Signal, dessen Frequenz proportional zur Drehgeschwindigkeit des Zahnrades 12 ist. Die Rechtecksignale werden pro Kanal der auf dem ASIC vorhandenen Signalverarbeitungsvorrichtung 4, 6 zugeführt. Nach der Verarbeitung im ASIC kann eine übergeordnete Auswerteeinrichtung aus den zwei ASIC Ausgangssignalen die Drehgeschwindigkeit bestimmen. Da zwei Kanäle vorhanden sind, die um etwa 90° phasenverschobene Signale liefern, kann die übergeordnete Auswerteeinrichtung zusätzlich die Drehrichtung des Zahnrades 12 bestimmen.

Die Hall-Sensoren H1-H4 haben in der Praxis unterschiedliche elektrische Eigenschaften, beispielsweise unterschiedliche Offsets und Empfindlichkeiten. Diese Unterschiede können gemäss einem Aspekt der vorliegenden Erfindung durch entsprechende Massnahmen kompensiert werden, beispielsweise durch ein magneto-mechanisches Kompensationsverfahren.

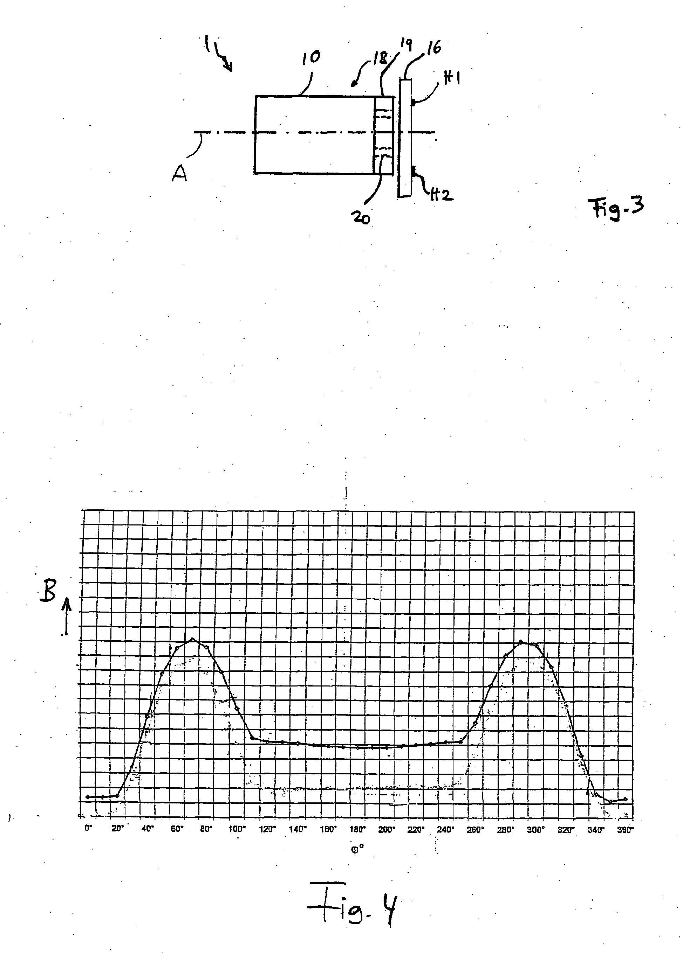

Figur 3 zeigt ein Ausführungsbeispiel einer Vorrichtung 1 mit einem entsprechend ausgestalteten Magnetsystem 18 zur Kompensation von verschiedenen elektrischen Eigenschaften. Das Magnetsystem 18 ist in der Vorrichtung 1 so implementiert, dass es ein von den Hall-Sensoren H1-H4 wahrgenommenes Magnetfeld in gewünschter Weise erzeugt und so die genannten Unterschiede kompensiert. Das Magnetsystem 18 (bzw. zumindest ein Teil desselben) kann um einen Drehwinkel ϕ relativ zur Anordnung der Sensoren H1-H4 drehbar gelagert sein, so dass das Magnetfeld zum Abgleich der Vorrichtung 1 gedreht werden kann, bis die gewünschte Beeinflussung und damit die Kompensation erzielt sind. Zum Abgleich werden am Ausgang 8 die Sensorsignale ausgewertet, und das Magnetfeld so lange gedreht, bis die gewünschte Kompensation erreicht ist.

In Figur 3 hat das Magnetsystem 18 eine Scheibe 19 aus Metall, die zwischen dem Permanentmagneten 10 und dem Träger 16 positioniert ist. In einem Ausführungsbeispiel kann die Scheibe 19 mit dem Permanentmagneten 10 verbunden sein, so dass sie zusammen mit dem Permanentmagneten 10 das Magnetsystem 18 bildet. Die Scheibe 19 kann ein oder mehrere Bereiche 20 unterschiedlicher magnetischer Permeabilität haben. Die Scheibe 19 kann beispielsweise Aussparungen, z. B. Löcher, haben, so dass sich im Bereich 20 einer Aussparung anstatt Metall ein nicht magnetisches Material, z.B. Luft oder Kunststoff, zwischen dem Träger 16 und dem Permanentmagneten 10 befindet. Diese Aussparungen verursachen ein unregelmässiges Magnetfeld, wobei im Bereich 20 einer Aussparung das Magnetfeld niedriger (vgl. Inversion der in Figur 4 gezeigten Funktion) ist als in den übrigen Bereichen. Ein Fachmann kann erkennen, dass das Magnetfeld im Bereich 20 einer Aussparung auch höher sein kann. Die Scheibe 19 kann allein oder zusammen mit dem Permanentmagneten 10 um eine Achse A gedreht werden, die senkrecht zur Scheibe 19 und zum Träger 16 steht und durch die Mitte der vier Sensoren H1, H2, H3, H4 geht.

Figur 4 zeigt eine beispielhafte Funktion der Magnetfeldstärke B als Funktion des Drehwinkels ϕ und zwar am Ort eines der vier Sensoren. Alternativ zu Figur 4 kann die Magnetfeldstärke B auch als invertierte Funktion dargestellt werden. An den Orten der übrigen drei Sensoren ist der Verlauf der Magnetfelder phasenverschoben. Die gezeigte Funktion stellt eine zur Kompensation geeignete Magnetfeldtopologie dar und kann beispielsweise mit Hilfe einer Metallscheibe erzielt werden, die zwei Löcher von ca. 1-1,5 mm Durchmesser hat, und mit dem Permanentmagneten 10 gekoppelt ist.

Wie in Figur 4 gezeigt, hat die Magnetfeldtopologie zwei Höcker, deren Maxima rund 220° auseinander liegen. In einem Ausführungsbeispiel existiert ein Maxima im Bereich um 70° und eines im Bereich um 290°. Zwischen diesen Höckern ist die Magnetfeldstärke geringer, sie hat dort aber einen im wesentlichen konstanten Verlauf. In einem Ausführungsbeispiel kann die Magnetfeldtopologie auch so gewählt werden, dass anstelle der Maxima Minima hat.

Der Zweck der durch die Drehung der Scheibe 19 zu erreichenden Kompensation liegt darin, jeden Kanal so zu justieren, dass dessen beide Sensoren ungefähr gleich grosse Signale liefern. Dies ist im Folgenden anhand einiger Beispiele illustriert. Dabei bezeichnet E1 die Empfindlichkeit von Sensor H1, E2 die Empfindlichkeit von Sensor E2, etc., und B1 das Feld am Ort des Sensors H1, B2 das Feld am Ort des Sensors H2, etc.

Im Idealfall wäre die Scheibe 19 so zu drehen, dass E1·B1 = E2·B2 und E3·B3 = E4·B4. Ist beispielsweise E1 > E2 und E3 > E4, so sollte B1 < B2 und B3 < B4 sein, etc. Indem die Drehwinkeldifferenz zwischen den Maxima der Kurve nach Figur 4 um nicht genau 180°, sondern z.B. um 220 +/- 20° auseinander liegen, ergibt sich bei einer Drehung der Scheibe 19 um 180° eine grosse Zahl unterschiedlicher Einstellmöglichkeiten, von denen mindestens eine der jeweiligen Anforderung zumindest näherungsweise gerecht wird.

Bei der Wahl der Form des Magnetfelds ist es vorteilhaft, zu grosse Steigungen zu vermeiden. Ausserdem ist es von Vorteil, wenn die Amplitude der Höcker grösser als die Dispersion der zu kompensierenden elektrischen Werte ist.

Die Magnetfeldtopologie kann auch durch ein anderes Magnetsystem erreicht werden. So kann beispielsweise die Oberfläche des Permanentmagneten 10 so ausgestaltet sein, dass sie im wesentlichen die gleiche Magnetfeldtopologie schafft, wie das aus Permanentmagnet 10 und Scheibe gebildete Magnetsystem 18. Die Oberfläche kann beispielsweise Löcher oder Kerben aufweisen oder unterschiedliche Materialien (z.B. mit unterschiedlichen magnetischen Permeabilitäten) enthalten. In einem anderen Ausführungsbeispiel kann das Magnetsystem durch einen Permanentmagneten 10 erzielt werden, der eine nicht regelmässige Magnetisierung hat.

## Patentansprüche

1. Vorrichtung (1) zur Messung von Drehzahlen, mit einem Magnetsystem (18), mindestens vier magnetfeldsensitiven Sensoren (H1, H2, H3, H4), die vom Magnetsystem (18) gekoppelte Magnetfeldänderungen in elektrische Sensorsignale wandeln, und einer Einrichtung (4, 6) zur Verarbeitung der elektrischen Sensorsignale, wobei jeweils zwei der magnetfeldsensitiven Sensoren (H1, H2, H3, H4) einen Kanal bilden, wobei die magnetfeldsensitiven Sensoren (H1, H2, H3, H4) auf einem gemeinsamen Träger (16) angeordnet sind, und wobei ein Signal eines ersten Kanals (D1) und ein Signal eines zweiten Kanals (D2) eine Phasenverschiebung von etwa 90° haben.

2. Vorrichtung (1) nach Anspruch 1, bei der ein Kanalabstand (D1) zwischen einem ersten Kanal und einem zweiten Kanal besteht, und ein Differentialabstand (D2) zwischen den Sensoren (H1, H2, H3, H4) eines Kanals (D1, D2) besteht, wobei der Kanalabstand (D1) grösser als der Differentialabstand (D2) ist.

3. Vorrichtung (1) nach Anspruch 2, wobei der Kanalabstand (D1) etwa 2,6 mm beträgt und wobei der Differentialabstand (D2) etwa 1,6 mm beträgt.

4. Vorrichtung (1) nach einem der vorhergehenden Ansprüche, bei der Träger (16) eine Fläche von etwa 4 mm² bis etwa 6 mm² hat.

5. Vorrichtung (1) nach einem der vorhergehenden Ansprüche, bei der die magnetfeldsensitiven Sensoren (H1, H2, H3, H4) und die Einrichtung (4, 6) zur Verarbeitung der elektrischen Sensorsignale auf dem gemeinsamen Träger (16) integriert sind.

6. Vorrichtung (1) nach einem der vorhergehenden Ansprüche, bei der das Magnetsystem (18) zur Kompensation von unterschiedlichen elektrischen Eigenschaften der Sensoren (H1, H2, H3, H4) ausgestaltet ist, wobei das Magnetsystem (18) ein vorbestimmtes und von den Sensoren (H1, H2, H3, H4) wahrnehmbares Magnetfeld erzeugt, um die unterschiedlichen elektrischen Eigenschaften der Sensoren (H1, H2, H3, H4) zu kompensiert.

7. Vorrichtung (1) nach Anspruch 6, bei der das vom Magnetsystem (18) erzeugte Magnetfeld um einen Drehwinkel (ϕ) drehbar ist, so dass es zu einem Abgleich der Vorrichtung (1) gedreht werden kann, bis eine gewünschte Beeinflussung und damit die Kompensation erzielt sind.

8. Vorrichtung (1) nach einem der Ansprüche 6 bis 7, bei der das Magnetsystem (18) mindestens zwei Bereiche (20) unterschiedlicher magnetischer Permeabilität hat.

9. Vorrichtung (1) nach Anspruch 8, bei der das Magnetsystem (18) einen Permanentmagneten (10) und eine Scheibe (19) enthält, wobei die Bereiche (20) Aussparungen im Material einer Scheibe (19) sind.

10. Vorrichtung (1) nach einem der Ansprüche 6 bis 7, bei der das Magnetsystem (18) aus einem Permanentmagneten (10) mit einer Oberflächenstruktur aus Löchern, Kerben oder verschiedenen Materialien besteht, um ein festgelegtes unregelmässiges Magnetfeld zu erzeugen.

11. Vorrichtung (1) nach einem der Ansprüche 6 bis 7, bei der das Magnetsystem (18) aus einem Permanentmagneten (10) mit einer nicht regelmässigen Magnetisierung besteht.

12. Vorrichtung (1) nach einem der vorhergehenden Ansprüche, bei der der Träger (16) rechteckförmig ist, und bei der die Sensoren (H1, H2, H3, H4) in der Nähe von Ecken des Trägers (16) angeordnet sind.

13. Vorrichtung (1) nach einem der vorhergehenden Ansprüche, bei der das Magnetsystem (18) ein Magnetfeld erzeugt, welches mindestens zwei Maxima oder Minima unterschiedlicher Drehwinkel aufweist.

14. Vorrichtung (1) nach Anspruch 13, bei der zwischen den Maxima oder Minima eine Drehwinkeldifferenz ungleich 180° besteht, und insbesondere dass die Drehwinkeldifferenz 220° +/- 20° beträgt.

15. Verfahren zur Kompensation von unterschiedlichen elektrischen Eigenschaften magnetfeldsensitiven Sensoren (H1, H2, H3, H4) in einer Vorrichtung (1) zur Messung von Drehzahlen, in der die Sensoren (H1, H2, H3, H4) Magnetfeldänderungen in elektrische Sensorsignale wandeln, bei dem
ein Magnetsystem (18) an die magnetfeldsensitiven Sensoren (H1, H2, H3, H4) gekoppelt wird, wobei das Magnetsystem (18) ein vorbestimmtes und von den Sensoren (H1, H2, H3, H4) wahrnehmbares Magnetfeld erzeugt,
die elektrischen Sensorsignale ausgewertet werden, um unterschiedliche elektrische Eigenschaften zu erkennen, und
das Magnetfeld (18) relativ zu den magnetfeldsensitiven Sensoren (H1, H2, H3, H4) gedreht wird, bis eine gewünschte Beeinflussung und damit die Kompensation erzielt sind.
